(19) Europäisches Patentamt / European Patent Office / Office européen des brevets

(11) **EP 1 551 652 B1**

(12) **FASCICULE DE BREVET EUROPEEN**

(45) Date de publication et mention
de la délivrance du brevet:
**06.06.2012 Bulletin 2012/23**

(21) Numéro de dépôt: **03765014.0**

(22) Date de dépôt: **17.07.2003**

(51) Int Cl.:
*B60G 3/20* (2006.01)     *B60G 7/02* (2006.01)
*B60G 17/015* (2006.01)     *B60G 21/00* (2006.01)
*B62D 17/00* (2006.01)

(86) Numéro de dépôt international:
**PCT/EP2003/007761**

(87) Numéro de publication internationale:
**WO 2004/009383 (29.01.2004 Gazette 2004/05)**

(54) **DISPOSITIF DE SUSPENSION D'UNE ROUE DE VEHICULE**

FAHRZEUGRADAUFHÄNGUNGSVORRICHTUNG

VEHICLE WHEEL SUSPENSION DEVICE

(84) Etats contractants désignés:
**AT BE BG CH CY CZ DE DK EE ES FI FR GB GR
HU IE IT LI LU MC NL PT RO SE SI SK TR**

(30) Priorité: **22.07.2002 FR 0209625**

(43) Date de publication de la demande:
**13.07.2005 Bulletin 2005/28**

(73) Titulaires:
• **Société de Technologie Michelin
63000 Clermont-Ferrand Cedex 09 (FR)**
• **Michelin Recherche et Technique S.A.
1763 Granges-Paccot (CH)**

(72) Inventeurs:
• **ANDRE, François
F- 63540 Romagnat (FR)**
• **BLONDELET, Michel
F-63450 Le Crest (FR)**
• **GOGU, Grigoire
F-63170 Aubiere (FR)**
• **SERRA, Loic
F-63450 Tallende (FR)**

(74) Mandataire: **Lasson, Cédric Y. M.
Manufacture Française
des Pneumatiques Michelin
SGD/LG/PI-F35-Ladoux
63040 Clermont-Ferrand Cedex 9 (FR)**

(56) Documents cités:
**WO-A-01/72572     GB-A- 2 356 606
US-A- 5 580 089**

EP 1 551 652 B1

Printed by Jouve, 75001 PARIS (FR)

## Description

La présente invention concerne la liaison au sol des véhicules, en particulier les dispositifs de suspension, et plus particulièrement le guidage des roues.

L'environnement technique de l'invention et la terminologie employée dans la présente demande sont décrits avec précision dans le préambule de la demande internationale publiée sous le numéro WO 01/72572. Le lecteur est invité à se reporter en particulier aux trois premières pages de cette publication.

Le document US 5580089 divulgue un système actif de guidage des roues.

La présente invention concerne les dispositifs de suspension conférant au porte-roue, par rapport à la caisse, un degré de liberté de carrossage et un degré de liberté de débattement de suspension indépendants l'un de l'autre. La demande de brevet EP 1070609 décrit un tel dispositif. Ces dispositifs confèrent à la roue un degré de liberté supplémentaire par rapport aux dispositifs couramment utilisés sur les véhicules de série actuels. De tels systèmes de suspension peuvent avoir un fonctionnement dit "passif", c'est à dire être configurés pour que les forces qui agissent sur le véhicule provoquent une variation de carrossage dans le sens souhaité. Cette variation peut être libre ou contrôlée par un moyen de contrôle. Si au contraire, la variation de carrossage est principalement provoquée par un actionneur, le fonctionnement est alors dit "actif".

Un objectif de l'invention est celui de pouvoir amplifier, accélérer ou faciliter la variation de carrossage recherchée par exemple lorsque le véhicule suit une courbe. En effet, des frottements, des raideurs ou des inerties apparaissent inévitablement dans la pratique et tendent à limiter, ou à freiner la variation de carrossage. Il est donc souhaitable que, au moins dans certaines situations de roulage du véhicule, la variation de carrossage soit influencée positivement.

Un autre objectif de l'invention est celui de faciliter la conception de tels systèmes notamment quant à la position des axes de poussée des ressorts de suspension. On a en effet constaté que la position des axes de poussée des ressorts de suspension, qui transmettent la charge de la caisse à l'essieu, a une grande influence sur l'équilibre dynamique du dispositif de suspension. Cette influence est par exemple très sensible lors de sollicitations verticales unilatérales ou alternées. Pour un fonctionnement optimal du dispositif de l'état de la technique, la liberté de positionnement des axes de poussée des ressorts est donc très réduite. Il est souhaitable d'augmenter cette liberté de conception afin par exemple de pouvoir choisir des positions de ressorts qui optimisent l'utilisation des volumes disponibles sous la caisse ou permettent de limiter la masse des ressorts.

Ces objectifs sont atteint par un dispositif de suspension du type précité qui comprend en outre, selon la présente invention, un dispositif anti-roulis ayant sur le carrossage une influence variable en fonction du roulis de la caisse.

De préférence, le dispositif de l'invention est tel que le porte-roue étant destiné à porter une roue de rayon "r" reposant sur le sol, le mouvement de carrossage du porte-roue par rapport à la caisse admettant un centre instantané de rotation situé dans un intervalle allant de 0.3 r au dessus du sol à 1.0 r en dessous du sol et de préférence encore à 0.5 r en dessous du sol.

Selon l'invention le dispositif anti-roulis comprend de préférence une barre anti-roulis, sollicitée en torsion, montée à rotation vis à vis de la caisse, ladite barre anti-roulis étant retenue en translation par rapport à ladite caisse.

Selon un mode de réalisation de l'invention, le dispositif anti-roulis comprend des chambres contenant un fluide dont le volume varie en fonction du débattement de suspension.

Le dispositif anti-roulis peut de préférence être contrôlé activement.

De préférence, le dispositif de l'invention est configuré de manière à ce que, l'effort transversal (Fy) exercé par le sol sur la roue dans l'aire de contact généré au cours d'un faible débattement de suspension ne dépasse pas une limite correspondant à 0.1 P et de préférence à 0.05 P, « P » étant la charge à l'essieu.

le dispositif de l'invention est de préférence est configuré de manière à ce que la variation de carrossage en l'absence d'effort transversal exercé par le sol au cours d'un faible débattement de suspension ne dépasse pas 2°.

De préférence, le dispositif anti-roulis est configuré de manière à ce que l'axe de la poussée résultante de l'action du ressort de suspension et du dispositif anti-roulis sur un élément de suspension soit, au cours d'un faible débattement unilatéral de suspension, au plus distant d'une distance "d" du point de concours des axes idéaux de poussée, la distance "d" correspondant à 6.5% de la voie de l'essieu.

De préférence, ledit dispositif anti-roulis est agencé de manière à influencer dans le même sens la variation de carrossage et la variation de l'angle de roulis de la caisse.

De préférence, le dispositif anti-roulis comprend une bielle relié aux éléments de suspension, ladite bielle étant inclinée par rapport à la verticale dans la position moyenne de la suspension de sorte qu'une extrémité supérieure de la dite bielle se situe plus près du plan de roue qu'une extrémité inférieure et de préférence encore ladite bielle est inclinée d'un angle supérieur à 5° par rapport à la verticale.

De préférence, le dispositif de suspension comporte une bascule liée d'une part à la caisse et d'autre part aux éléments de suspension, la liaison de ladite bascule à la caisse permettant ledit degré de liberté de carrossage.

De préférence, ledit centre instantané de rotation est situé sous le plan du sol afin que des efforts transversaux exercés par le sol sur la roue dans l'aire de contact induisent une inclinaison du porte-roue par rapport à la caisse dans le sens d'une diminution de carrossage lorsque lesdits efforts transversaux sont dirigés vers l'intérieur du véhicule et dans le sens d'une augmentation de carrossage lorsque lesdits efforts transversaux sont dirigés vers l'extérieur du véhicule.

De préférence, le dispositif de l'invention comporte en outre un porte-roue opposé destiné à porter une roue opposée d'un essieu dudit véhicule, ledit porte-roue opposé étant lié à la bascule selon une configuration symétrique de celle du porte-roue de sorte que le dispositif de suspension guide et suspend les deux roues d'un même essieu.

De préférence, le dispositif de l'invention comporte des moyens de contrôle du braquage liant le porte-roue à la bascule. Ces moyens de contrôle du braquage peuvent également lier le porte-roue à la bascule de manière à ce que le braquage soit dépendant du mouvement de carrossage.

L'invention concerne également un véhicule équipé du dispositif de l'invention. Ce véhicule peut être équipé, sur le même essieu, de deux dispositifs, lesdits dispositifs étant disposés sensiblement symétriquement par rapport à l'axe longitudinal du véhicule. Ces deux dispositifs peuvent être liés entre eux de manière à ce que les mouvements de carrossage de chaque porte-roue soient couplés.

Si le ou les dispositifs de suspension comprennent un actionneur pilotable, celui-ci peut-être piloté en fonction de paramètres de roulage du véhicule. Le véhicule peut également comporter deux dispositifs indépendants sur le même essieu, chaque dispositif étant contrôlé par un actionneur indépendamment de l'autre.

Plusieurs modes de réalisations de l'invention vont être décrits afin d'en illustrer les ' caractéristiques et d'en exposer les principes. Naturellement, de nombreux autres modes de réalisation de l'invention sont possibles comme le suggèrent les nombreuses variantes.

- Fig 1, 1a, 2, 3: Schémas de principe et de fonctionnement d'un dispositif selon un premier mode de réalisation de l'invention en vue longitudinale,
- Fig 4, 5, 5a, 5b, 5c: Schémas de principe et de fonctionnement d'un dispositif selon un deuxième mode de réalisation de l'invention en vue longitudinale,
- Fig 6: Schéma de principe de variantes du deuxième mode de réalisation de l'invention en vue longitudinale,
- Fig 7, 8: Schémas de principe de dispositifs selon d'autres modes de réalisation de l'invention en vue longitudinale,
- Fig 9, 10, 11: Schémas de principe de véhicules selon l'invention, en vue longitudinale.

Les figures ne sont pas représentées à l'échelle.

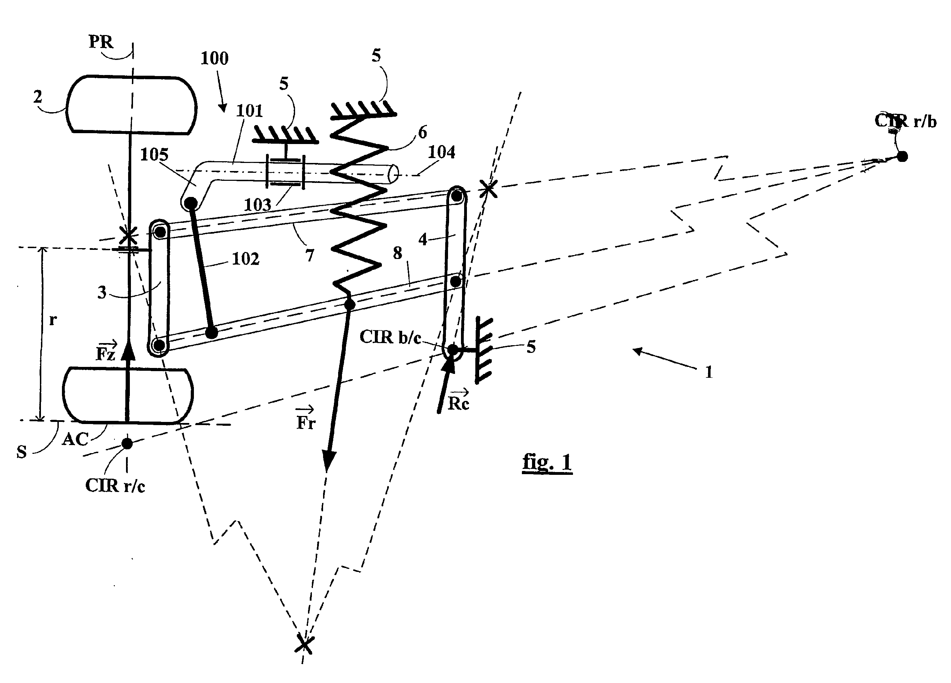

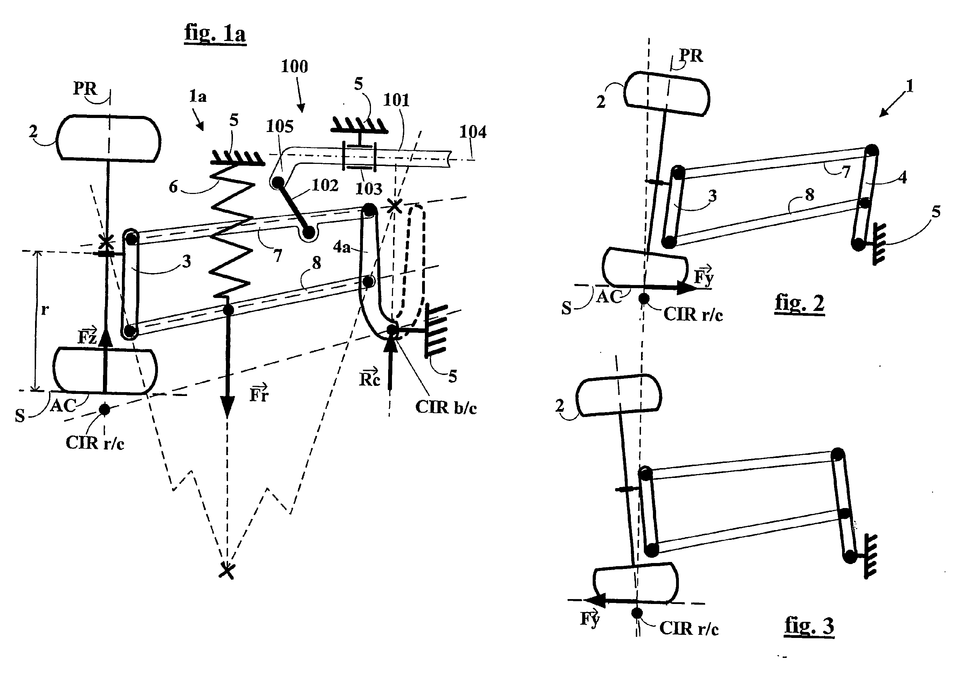

La figure 1 représente en vue longitudinale plane un dispositif de suspension 1 selon l'invention. Cette représentation plane (c'est à dire en 2 dimensions) est très commode car elle montrent bien ce en quoi le dispositif selon l'invention se distingue des dispositifs de l'état de la technique.

Le dispositif de suspension 1 comprend un porte-roue 3 destiné à maintenir le plan PR d'une roue 2, des bras supérieur 7 et inférieur 8, une bascule 4 et un ressort de suspension 6. La roue 2, de rayon « r », est en appui sur le sol S par l'intermédiaire de son aire de contact AC. Les bras supérieur 7 et inférieur 8 sont articulés par leurs extrémités extérieures (par rapport au véhicule auquel le dispositif est destiné) au porte-roue 3 et par leurs extrémités intérieures à la bascule 4. La bascule 4 est articulée à la caisse 5 du véhicule (représentée schématiquement). Ainsi, le dispositif de suspension 1 est configuré de manière à conférer au porte-roue, par rapport à la caisse 5, un degré de liberté de carrossage puisque le porte-roue peut s'incliner par rapport à la caisse et un degré de liberté de suspension puisque le porte-roue peut effectuer des mouvements sensiblement verticaux de façon connue en soi, par exemple à la manière des systèmes « multi-bras ».

Selon l'invention, le dispositif de suspension comprend un dispositif anti-roulis 100. Sur l'exemple représenté schématiquement à la figure 1, le dispositif anti-roulis comprend une barre 101 sensiblement transversale au véhicule, montée pivotante par rapport à la caisse autour d'un axe 104 par l'intermédiaire d'un ou plusieurs paliers 103. La barre anti-roulis 101 comporte une extrémité courbée 105 faisant office de bras de levier par rapport à l'axe 104. Ce bras de levier généralement horizontal est connectée par l'intermédiaire d'une bielle 102 à un élément mobile de la suspension, ici le bras inférieur 8. On a représenté ici la partie gauche du dispositif anti-roulis 100. De manière connue en soi, la partie droite (symétrique et non représentée) du dispositif anti-roulis est connectée aux éléments de suspension de la roue opposée.

En admettant l'hypothèse classique d'une liaison ponctuelle de la roue 2 sur le sol S, la théorie de la colinéarité des centres instantanés de rotation dans un mouvement plan permet de situer le centre instantané de rotation du mouvement de carrossage (CIR r/c) à l'intersection du plan de roue PR et de la droite portant les deux autre centres instantanés de rotation, celui du mouvement de la bascule par rapport à la caisse (CIR b/c) et celui du mouvement de suspension du porte-roue par rapport à la bascule (CIR r/b). Ce raisonnement cinématique est d'usage courant dans le domaine de la liaison au sol. On comprend alors que c'est le choix de la configuration, c'est à dire des dimensions et de l'orientation des différent éléments constitutifs du dispositif de suspension qui (en définissant les positions des axes caractéristiques des éléments de suspension) permet d'obtenir une position voulue du centre instantané de rotation (CIR r/c) du mouvement de carrossage. Ce raisonnement est valable dans la limite de petits mouvements de carrossage autour de la verticale où l'on peut confondre le plan de roue avec la verticale du centre de l'aire de contact. Pour des mouvements de carrossage plus importants, on doit considérer la verticale du centre de l'aire de contact.

La figure 1 représente le dispositif de suspension dans une position moyenne, que l'on peut définir comme la position correspondant au roulage en ligne droite sur un sol plat, le véhicule portant sa charge nominale.

Le dispositif anti-roulis 100 a d'une part pour fonction de limiter le roulis de la caisse. En effet lorsque la caisse 5 s'incline (par exemple en virage) c'est à dire que la suspension connaît un débattement sensiblement opposé d'une roue par rapport à l'autre, le dispositif anti-roulis résiste à ce roulis en prenant appui sur la partie de la suspension la plus enfoncée et en soulageant au contraire la charge transmise à la partie de la suspension la moins enfoncée. Cette fonction est connue en soi.

Le dispositif anti-roulis 100 a, selon l'invention, d'autre part pour fonction d'influencer le ' carrossage. En effet, le dispositif anti-roulis est configuré de manière à ce que, lors d'un débattement opposé des deux roues d'un même essieu, les efforts qu'il transmet aux éléments de suspension engendre une modification du carrossage. De préférence, le dispositif anti-roulis est configuré de manière à ce que les efforts transversaux transmis par le dispositif anti-roulis aux éléments de suspension influence le carrossage dans le même sens qu'il influence le roulis, c'est à dire que par exemple lorsque le véhicule décrit un virage à droite, la caisse ayant tendance à s'incliner vers la gauche, le dispositif anti-roulis exerce un couple tendant à incliner la caisse vers la droite (vers l'intérieur du virage) en même temps qu'il exerce des efforts sur les éléments de suspension tendant à incliner la roue 2 également vers la droite (donc également vers l'intérieur du virage).

Parmi les contraintes de conception d'un tel dispositif, on voit bien sur cette figure que la position du point d'articulation de la bascule sur la caisse est limitée, vers le bas de la figure, par la proximité du sol. Ainsi, en fonction de la garde au sol désirée sur le véhicule, on pourra opter pour des configurations différentes.

La figure 1 représente un cas particulier de configuration où la force Fr exercée par le ressort est inclinée vers l'extérieur du véhicule. En l'absence d'effort transversal exercé par le sol sur la roue dans l'aire de contact (la force Fz est verticale), l'équilibre est obtenu lorsque la force Rc exercée par la caisse sur la bascule est telle que représentée, c'est à dire légèrement inclinée vers l'intérieur du véhicule. Cette détermination peut se faire par le calcul ou par construction graphique. La construction graphique basée sur l'équilibre des différents éléments du dispositif est représentée sur la figure 1 en traits interrompus. On constate que la condition d'équilibre peut être assurée, même si la poussée du ressort est inclinée.

La figure 1a représente une variante intéressante par rapport à la configuration de la figure 1. Dans ce dispositif de suspension 1a, on a recherché à obtenir que la force Rc exercée par la caisse 5 sur la bascule 4a soit verticale (de la même manière que Fz).

Les constructions graphiques présentées dans les figure 1 et 1a sont basées sur les équilibres des différents éléments des systèmes 1 et 1a. L'équilibre global du dispositif de suspension impose dans le cas de la figure 1a, où deux des forces (Fz et Rc) sont verticales, que la troisième (Fr) soit également verticale. Cette configuration permet un équilibre statique parfait du véhicule car la caisse n'est soumise (dans la position moyenne) à aucun effort latéral contrairement à la configuration de la figure 1 dans laquelle l'équilibre statique du véhicule est assuré par la symétrie des efforts que subit la caisse.

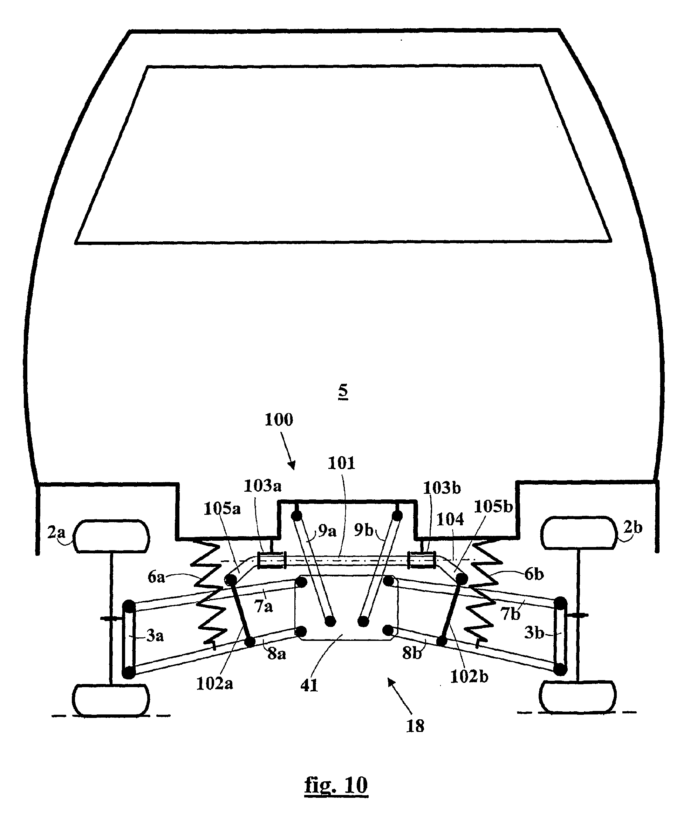

On a représenté en trait pointillé sur la figure 1a, le fait que la bascule 4a peut également constituer la bascule du dispositif (sensiblement symétrique) de suspension de la roue opposée comme on le décrira plus précisément à la figure 10.

Le dispositif anti-roulis 100 représenté à la figure 1a est tout à fait semblable à celui de la figure 1. Cependant, la bielle 102 est ici connectée au bras supérieur 7 alors que le ressort 6 demeure lié au bras inférieur 8.

La figure 2 représente le dispositif de suspension de la figure 1 dans une position où le carrossage a subi une variation négative. La roue 2 est inclinée vers l'intérieur du véhicule par une rotation autour du centre instantané de rotation du mouvement de carrossage (CIR r/c). On peut remarquer que la position de ce point n'est pas fixe car la position du centre instantané de rotation de la suspension (CIR r/b) varie légèrement du fait du pivotement des bras inférieur 8 et supérieur 7 sur cet exemple. Cette variabilité est bien sûr elle aussi conditionné par la configuration géométrique du dispositif.

Le centre instantané de rotation du mouvement de carrossage (CIR r/c) étant situé sous l'aire de contact, la variation de carrossage représentée ici peut être provoquée par un effort transversal Fy du sol S sur la roue 2 dans l'aire de contact AC. Cet effort Fy orienté vers l'intérieur du véhicule, peut trouver son origine dans l'accélération transversale provoquée par un virage ou une configuration de sol S incliné par rapport à l'horizontale.

La figure 3 reprend l'exemple des figures 1 et 2 dans le cas d'une variation de carrossage positive qui peut être provoquée par un effort transversal Fy orienté vers l'extérieur du véhicule.

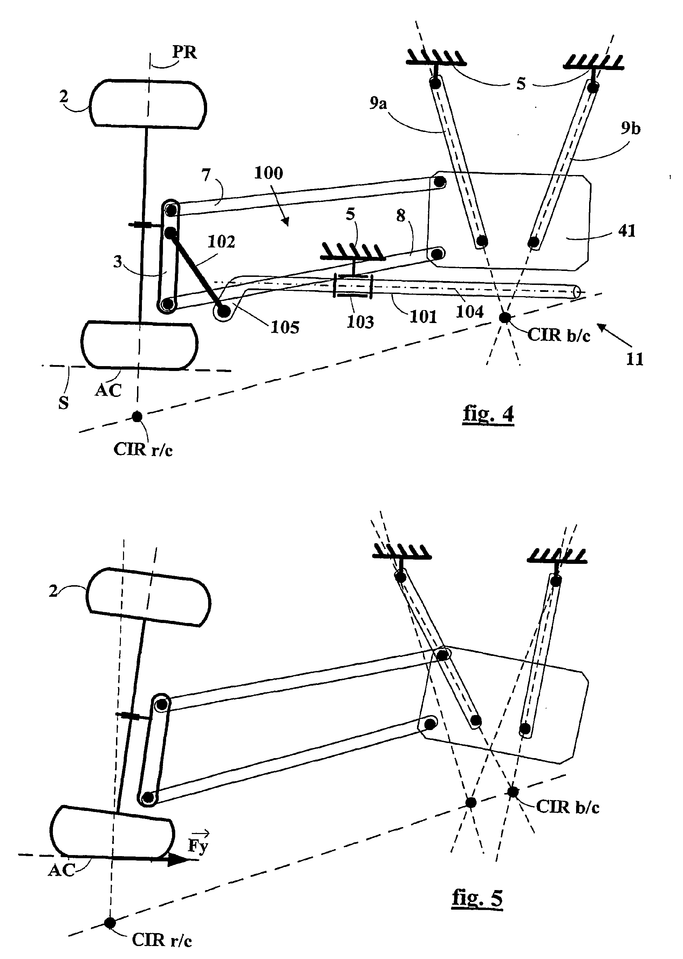

La figure 4 représente de façon similaire à la figure 1, un deuxième mode de réalisation de l'invention. Afin de permettre la comparaison directe avec le premier mode, les centres instantanés de rotation (CIR r/b, CIR b/c, CIR r/c) ont sensiblement les mêmes positions. Cependant, ceci (comme pour le premier mode) n'est qu'un exemple, une infinité de configurations étant possibles. La différence avec la figure 1 réside dans le mode d'articulation de la bascule 41 par rapport à la caisse 5. La rotation de la bascule autour du centre instantané de rotation CIR b/c est permise par ' une liaison par deux biellettes 9a et 9b, elles-mêmes articulées à la caisse de manière à ce que leurs axes respectifs se rejoignent, dans la position moyenne représentée ici, au centre instantané de rotation (CIR b/c) de la bascule 41 par rapport à la caisse 5. Ainsi, la bascule 41 est articulée par rapport à la caisse au moyen d'un pivot virtuel, c'est à dire un pivot qui n'est pas matérialisé par une liaison pivot autour d'un point fixe et unique comme sur les figures précédentes. Ceci a deux conséquences importantes : d'une part, la position de ce point n'est pas fixe par rapport à la caisse car il se déplace sensiblement lors de l'oscillation de la bascule et d'autre part, sa position n'est pas limitée par rapport au sol comme peut l'être celle de ce même point dans le cas de la figure 1. Le dispositif de la figure 4 comprend également un dispositif anti-roulis 100 reprenant les mêmes éléments que celui des figure précédentes. Sur cet exemple, le dispositif anti-roulis est disposé plus bas par rapport au véhicule et la bielle 102 est relié au porte-roue 3.

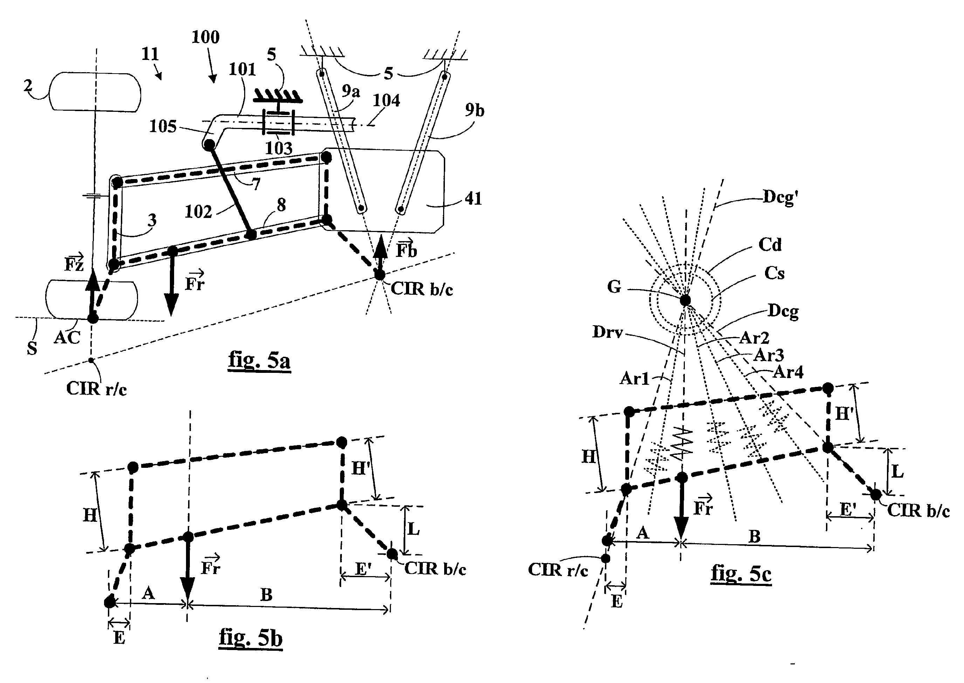

La figure 5 représente ce même dispositif de suspension dans une position de carrossage comparable à celle de la figure 2 (le dispositif anti-roulis est cependant omis sur cette figure).

Afin d'assurer l'équilibre parfait du dispositif soumis à une force verticale Fz exercée par le sol dans l'aire de contact, le dispositif doit être configuré de telle manière que, dans la position moyenne de la roue, chaque élément du dispositif est également en équilibre.

Les figures 5a et 5b exposent un moyen de réaliser cette condition d'équilibre. Cette configuration, illustrée ici à partir de l'exemple de configuration de la figure 4, est basé sur l'hypothèse d'un ressort produisant une poussée Fr verticale sur l'un des bras, ici le bras inférieur 8. L'équilibre du dispositif de suspension est soumis aux forces extérieures que sont la force verticale Fz exercée par le sol dans l'aire de contact, la force Fr exercée par le ressort sur le bras 8 et la résultante Fb des forces exercées par les biellettes 9a et 9b sur la bascule. Sur la figure 5b, on a représenté les dimensions caractéristiques du dispositif. « E » est la distance, en projection sur une droite horizontale, séparant le centre de l'aire de contact du point d'articulation du porte-roue 3 avec le bras (8) qui porte le ressort. « E' » est la distance, en projection sur une droite horizontale, séparant le centre instantané de rotation de la bascule par rapport à la caisse (CIR b/c) du point d'articulation, sur la bascule (41) du bras qui porte le ressort (8). « H » est la distance, dans le plan de carrossage, du point d'articulation du porte-roue 3 avec le bras qui porte le ressort (8) à l'axe du bras qui ne porte pas le ressort (7). « H' » est la distance, dans le plan de carrossage, du point d'articulation de la bascule 41 avec le bras qui porte le ressort (8) à l'axe du bras qui ne porte pas le ressort (7). « A » est la distance, dans le plan de carrossage, du centre de l'aire de contact à l'axe de poussée Fr du ressort. « B » est la distance, dans le plan de carrossage, du centre instantané de rotation (CIR b/c) à l'axe de poussée Fr du ressort.

sort. Notons que lorsque le centre instantané de rotation CIR b/c se situe dans le plan médian du véhicule, la somme des distances A et B correspond à la demie-voie du véhicule.

Partant de ces hypothèses, la résolution des équations d'équilibre des différents éléments conduit à la condition suivante: on obtient l'équilibre parfait lorsque le rapport $\dfrac{EBH'}{E'AH}$ est égal à 1. Ces formules sont basées sur l'hypothèse de liaisons sans frottement ni raideur. Dans la pratique, on peut obtenir un fonctionnement satisfaisant lorsque le système est configuré de manière à être proche de l'équilibre, par exemple avec un rapport EBH'/E'AH compris entre 0.5 et 1.5. Ce critère s'applique naturellement de manière générale et n'est pas limité à la configuration utilisée ici pour l'illustrer. Une manière d'appliquer ce critère dans une configuration donnée (A+B, E, E', H et H' données) est par exemple d'en déduire la position de l'axe idéal d'une poussée verticale Fr (en calculant A et B).

Pour remplir parfaitement la condition d'équilibre du dispositif et de ses éléments dans le cas général où la poussée n'est pas nécessairement verticale, la résolution des équations d'équilibre a démontré que l'axe de poussée du ressort doit, pour une configuration donnée, passer par un point unique. Ce point unique peut être défini comme le point de concours des axes de poussée idéaux.

Pour déterminer ce point de concours, on peut déterminer deux axes idéaux différents et rechercher leur intersection dans le plan de carrossage. On a également constaté que ce point se situe à l'intersection de tout axe de poussée idéal et de la droite passant par le centre instantané de rotation (CIR b/c) de la bascule par rapport à la caisse et par le point de pivot, sur la bascule, du bras qui porte le ressort. Cette constatation permet, comme exposé plus bas, une détermination simple du point de concours à partir de la configuration étudiée.

La détermination graphique du point de concours est représentée à la figure 5c à partir de l'exemple de la configuration de la figure 5. Pour déterminer ce point (G), on a utilisé ici un axe (Drv) de poussée idéal particulier, vertical dont la position peut être déterminée en fonction des caractéristiques géométriques du dispositif. En effet, on a vu précédemment que, dans le cas d'une poussée verticale, la position de l'axe de poussée idéal vérifie la condition selon laquelle le rapport $\dfrac{EBH'}{E'AH}$ est égal à 1 (voir figure 5b). La droite Dcg est la droite qui passe à la fois par le point CIR b/c et par le point de pivot, sur la bascule 41, du bras qui porte le ressort (ici le bras inférieur 8). La droite Drv coupe la droite Dcg au point G. Ce point G est donc le point unique (pour une configuration donnée) par lequel doit passer l'axe de poussée pour assurer un équilibre parfait. Le point G est le point de concours des axes idéaux de poussée. On a représenté quatre exemples (Ar1, Ar2, Ar3, Ar4) d'axes de poussée idéaux qui satisfont les conditions d'équilibre pour la position moyenne de la roue. On a, en outre, représenté schématiquement des ressorts. En pratique, l'implantation d'un ressort peut prendre de nombreuses formes, le critère pertinent étant la position de l'axe (Ar1, Ar2, Ar3, Ar4) de la poussée qu'il exerce.

Une autre façon de déterminer la position du point G est de rechercher, dans le mouvement de carrossage, le centre instantané de rotation par rapport à la caisse de la pièce de la suspension sur laquelle s'appuie le ressort. Si on applique ce raisonnement sur l'exemple de la figure 5c, on peut construire la droite Dcg' qui est la droite qui passe à la fois par le point CIR r/c et par le point de pivot, sur le porte-roue 3, du bras qui porte le ressort (ici le bras inférieur 8). L'intersection des droites Dcg et Dcg' définit alors le centre instantané de rotation recherché et donc le point G. Dans le cas où le ressort s'appuie sur le porte-roue, on peut constater que le point G est confondu avec le centre instantané de rotation du porte-roue par rapport à la caisse (CIR r/c).

Lors du fonctionnement du dispositif de suspension, l'axe de poussée du ressort peut varier du fait des déplacements des différents éléments. L'axe de poussée du ressort peut alors s'éloigner du point G (qui est déterminé en position moyenne) et l'équilibre peut s'éloigner de l'équilibre parfait.

En plus de sa variation lors du fonctionnement du dispositif, l'axe de poussée peut également, dans la position moyenne, être distant du point de concours du fait par exemple des tolérances de fabrication et/ou des compromis de conception comme les raideurs des articulations. De préférence cependant, l'effort transversal exercé par le sol sur la roue dans l'aire de contact généré au cours de grands débattements de suspension ne dépasse pas, lors du roulage en ligne droite, une limite correspondant à 0.3 P, « P » étant la charge à l'essieu. Une façon de remplir cette condition est de garantir que la distance, dans le plan de carrossage, du point G à l'axe de poussée du ressort, au cours de grands débattements, n'excède pas 20% de la distance A+B. De préférence encore, l'effort transversal exercé par le sol sur la roue dans l'aire de contact généré au cours de faibles débattements de suspension ne dépasse pas, lors du roulage en ligne droite, une limite correspondant à 0.1 P. Une façon de remplir cette condition est de garantir que la distance, dans le plan de carrossage, du point G à l'axe de poussée du ressort, dans la position moyenne, n'excède pas 13% de la distance A+B. Du fait des faibles variations de l'axe de poussée du ressort dans la limite des faibles débattements de suspension, on peut vérifier ce critère par des mesures statiques du dispositif de suspension dans sa position moyenne.

On a représenté schématiquement par un premier cercle Cd (dont le rayon correspond à 20% de la distance A+B) centré sur le point de concours G, la zone que doit nécessairement couper l'axe de poussée au cours de grands débattements pour satisfaire le premier critère de distance énoncé.

On a représenté schématiquement par un deuxième cercle Cs (dont le rayon correspond à 13 % de la distance A+B), la zone que doit nécessairement couper l'axe de poussée, dans la position moyenne, pour satisfaire le deuxième critère de distance énoncé.

L'exemple présenté à la figure 5c est une configuration particulière mais on comprend bien que la détermination du point de concours (G) peut être faite de façon similaire pour n'importe quelle configuration du dispositif de l'invention et que les critères d'équilibre associés à ce raisonnement s'applique également.

On entend par "axe idéal de poussée" ou "axe de poussée idéal", tout axe de poussée du ressort tel que le dispositif soit en parfait équilibre dans la position moyenne de la roue en l'absence d'effort transversal exercé par le sol dans l'aire de contact. La position moyenne de la roue peut être définie comme la position de conception, c'est à dire la position de la roue par rapport à la caisse lorsque chaque roue porte sa charge nominale et que l'orientation du plan de roue correspond au roulage en ligne droite.

Pour tenir compte de l'action du dispositif anti-roulis lors d'un faible débattement unilatéral de la suspension, on peut raisonner sur un axe de poussée globale résultant de l'action combinée du ressort de suspension et du dispositif anti-roulis. C'est alors cet axe de poussée globale qui doit satisfaire les critères d'équilibre susmentionnés.

De préférence le dispositif anti-roulis est configuré de manière à ce que la variation de carrossage en l'absence d'effort transversal (Fy) exercé par le sol au cours d'un faible débattement de suspension ne dépasse pas 2°, de préférence encore 1°.

Une méthode intéressante pour satisfaire les critères que l'on aura choisis pour le fonctionnement du dispositif de l'invention consiste à réaliser des plans d'expériences sur les paramètres de configuration et à sélectionner les configurations les plus favorables.

On entend par "grands débattements", des débattements sensiblement verticaux de suspension, de part et d'autre autour de la position moyenne de la roue, allant jusqu'à 80% du débattement autorisé par le dispositif de suspension et on entend par "faibles débattements", des débattements sensiblement verticaux de suspension, de part et d'autre autour de la position moyenne, limités à 20% du débattement autorisé par le dispositif de suspension.

On entend par "configuration" l'ensemble des caractéristiques géométriques du dispositif de suspension telles que l'on peut les déterminer dans la position moyenne de la roue.

A la figure 5a, on a représenté un dispositif anti-roulis 100 similaire à celui de la figure 1.

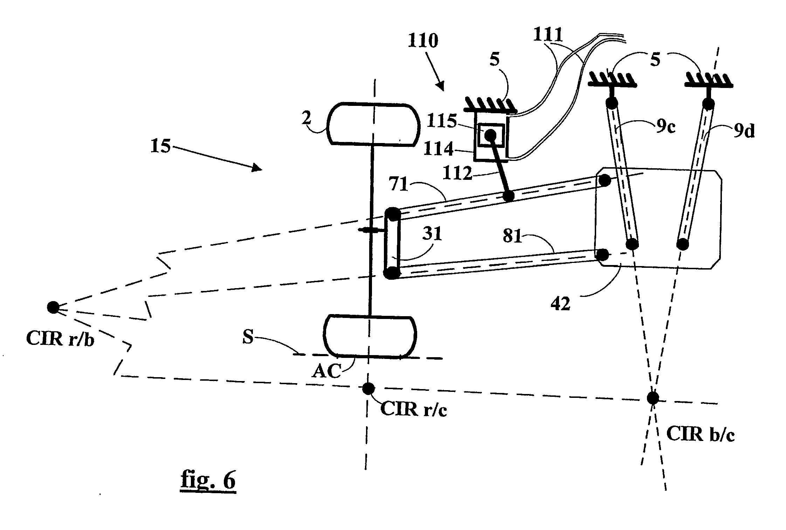

La figure 6 représente un mode de réalisation semblable à celui des figures 4 et 5, cependant le centre instantané de rotation de carrossage (CIR r/c) est obtenu par une configuration différente. En effet, dans cette configuration, les bras supérieur 71 et inférieur 81 convergeant vers un point (CIR r/b) plus bas (et situé cette fois du coté de l'extérieur du véhicule), le point de pivot de la bascule 41 par rapport à la caisse 5 (c'est à dire le centre instantané de rotation CIR b/c) doit être situé plus bas également. Dans l'exemple représenté, ce point se situe sous le sol S, c'est à dire qu'il ne peut être qu'un pivot virtuel. Ainsi, cette configuration des centres instantanés de rotation n'est pas réalisable avec le système décrit sur les figures 1 à 3. Sur cet exemple, on a représenté un autre mode de réalisation du dispositif anti-roulis de l'invention. Ce dispositif anti-roulis 110 fonctionne sur le principe des vases communicants. La bielle 112 commande un piston 115 qui se déplace dans un cylindre 114 lié à la caisse 5. Le piston 115 sépare deux chambres remplies d'un fluide (gaz et/ou liquide). La pression qui règne dans ces chambres est transmise par les conduits 111 à un dispositif équivalent agissant sur le dispositif de suspension de la roue opposée de sorte qu'un débattement de suspension de la roue 2 tende à générer un mouvement de même sens de la roue opposée. Pour cela, on peut par exemple connecter les conduits 111 de sorte que la chambre inférieure du cylindre 114 soit reliée à la chambre supérieure du cylindre opposé et vice-versa. On peut également mettre en oeuvre un dispositif de contrôle actif ou passif dans le circuit de fluide.

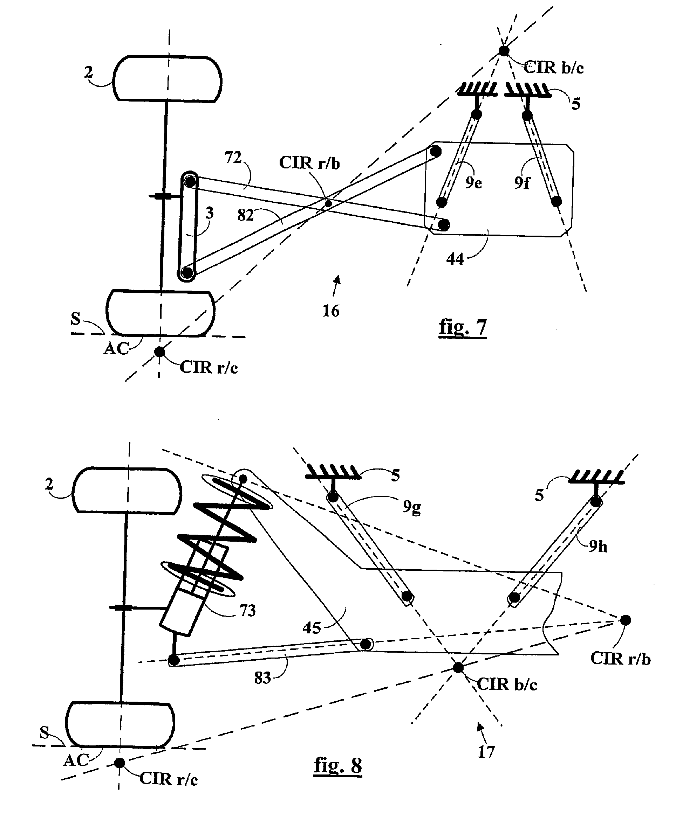

La figure 7 représente un mode de réalisation très différent des modes précédemment décrits en ce que la position souhaitée du centre instantané de rotation de carrossage (CIR r/c) est obtenue par la combinaison d'un centre instantané de rotation (CIR b/c) de la bascule 44 par rapport à la caisse 5 situé en hauteur et d'un centre instantané de rotation (CIR r/b) du porte-roue par rapport à la bascule situé au point de croisement des bras transversaux 72 et 82. L'orientation des biellettes (9e, 9f) est donc inversée par rapport aux configurations précédemment décrites pour permettre une telle position du point CIR b/c. Naturellement, ceci n'est qu'un exemple de réalisation, le moyen d'articulation de la bascule 44 pourrait tout à fait avoir la forme de celui représenté à la figure 1, pourvu que le pivotement se fasse à la hauteur voulue par rapport à la caisse 5. Un avantage de cette configuration est que le centre de roulis d'un tel dispositif de suspension se trouve notablement plus haut que dans les configurations précédemment décrites. Cet effet peut être intéressant par exemple, pour des véhicules dont le centre de gravité est relativement haut comme les monospaces ou les SUV ('sport utility vehicle').

La figure 8 représente un mode de réalisation très différent des modes précédemment décrits en ce qu'il utilise une architecture de suspension Macpherson (73, 83) articulée à une bascule 45 dont la fonction est la même que précédemment. La position souhaitée du centre instantané de rotation de carrossage (CIR r/c) est donc obtenue par la combinaison d'un centre instantané de rotation (CIR b/c) de la bascule 45 par rapport à la caisse 5 et d'un centre instantané de rotation du porte-roue par rapport à la bascule (CIR r/b) situé au point de croisement de l'axe du bras inférieur 82 et de la normale à l'axe de la jambe de force Macpherson 73. L'implantation des biellettes (9g, 9h) est comparable à celle des modes de réalisations précédemment décrits. Naturellement, comme pour la plupart des exemples décrits ici, la liaison de la bascule à la caisse peut être une pivot virtuel mobile (cas de la figure 8) ou un pivot fixe et matérialisé comme sur les figures 1 à 3 ou fixe et virtuel.

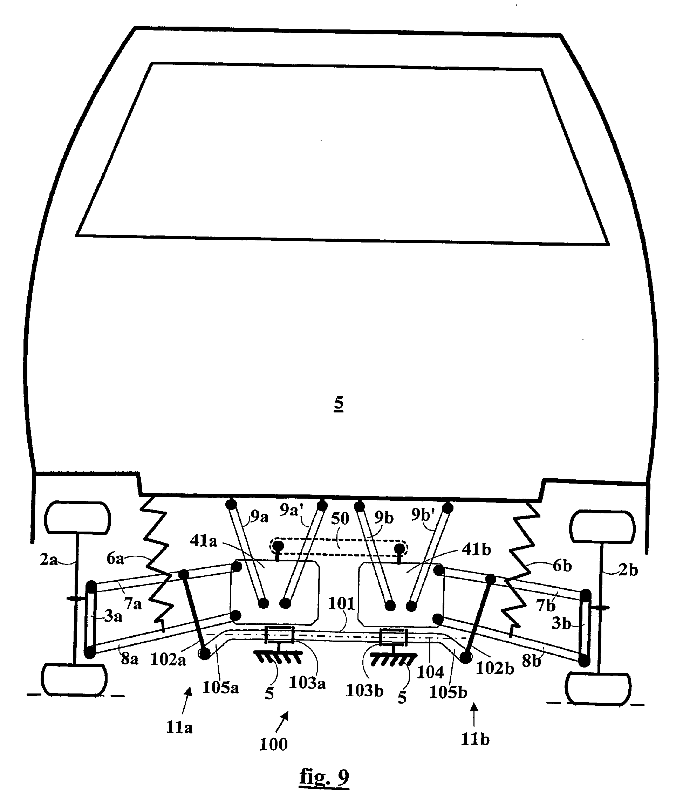

La figure 9 représente un véhicule selon l'invention. Il est équipé de deux dispositifs de suspension selon l'invention, disposés sensiblement symétriquement par rapport à l'axe longitudinal du véhicule. Les dispositifs de suspension représentés ici reprennent la configuration précédemment décrite aux figures 4 et 5. Ils peuvent naturellement être indépendants l'un de l'autre ou alternativement être liés par un moyen de couplage comme un poussoir 50 (dessiné en pointillé). De cette manière les comportements des roues (2a, 2b), au moins en terme de carrossage, sont couplés. Ce couplage peut rendre les conditions d'équilibre du véhicule plus faciles à satisfaire. Dans le cas où les deux dispositifs sont indépendants, il peuvent faire l'objet d'un contrôle indépendant. Si ce contrôle indépendant est actif, on peut le commander de manière différente pour chaque roue. Par exemple, on peut ne vouloir modifier le carrossage que pour la roue extérieure au virage.

La figure 9 montre des bascules (41a, 41b) relativement proches mais il s'agit d'une configuration particulière, chaque bascule pouvant être au contraire plus proche de sa roue respective.

Alternativement, dans une construction similaire, afin par exemple que les bras transversaux (7a, 8a, 7b, 8b) soient plus longs, les bascules 41 a et 41b peuvent être dans des plans légèrement différents le long de l'axe de véhicule, les bras guidant la roue gauche 2a étant articulés sur la bascule droite 41 b et vice versa.

Le dispositif anti-roulis 100 est ici intégralement représenté. Il est tout à fait similaire à celui de la figure 4 à la différence près que les bielles (respectivement 102a et 102b) sont ici liées aux bras ou triangles supérieurs (respectivement 7a et 7b).

La figure 10 représente un autre véhicule selon l'invention. Il est équipé d'un mode préféré de réalisation du dispositif de suspension 18 selon l'invention. Ce dispositif comparable à ceux décrits plus haut comporte en outre un porte-roue opposé 3b destiné à porter une roue opposée 2b d'un essieu portant la caisse 5 du véhicule. Le porte-roue opposé 3b est lié à la bascule 41 selon une configuration sensiblement symétrique de celle du porte-roue 3 a. Un avantage de ce mode de réalisation est bien sûr un nombre d'éléments réduit par rapport à celui représenté à la figure 9. Ceci a généralement une répercussion directe sur le prix de revient. Un autre avantage est que l'effet de couplage, décrit comme une option sur la figure 9, est ici total. Une autre différence de ce mode de réalisation du véhicule de l'invention par rapport à celui de la figure 9 peut être un implantation plus contraignante sous le véhicule en terme d'encombrement.

On a représenté ici une réalisation particulière mais naturellement tous les modes de réalisation de l'invention (illustrés précédemment ou non) sont susceptibles de constituer un tel essieu unique.

Le dispositif anti-roulis 100 est ici intégralement représenté. Il est sur cet exemple tout à fait similaire à celui de la figure 1.

On visualise bien sur cette figure le fonctionnement du dispositif anti-roulis: si par exemple la roue gauche 2a se déplace vers le haut par rapport à la caisse 5, le mouvement du bras inférieur gauche 7a est transmis par la bielle gauche 102a au levier gauche 105a de la barre anti-roulis 101. La barre anti-roulis a alors tendance à tourner autour de son axe 104 et transmet au bras inférieur droit 7b par l'intermédiaire du levier droit 105b et de la bielle droite 102b un effort qui tend à déplacer la roue droite 2b vers le haut par rapport à la caisse.

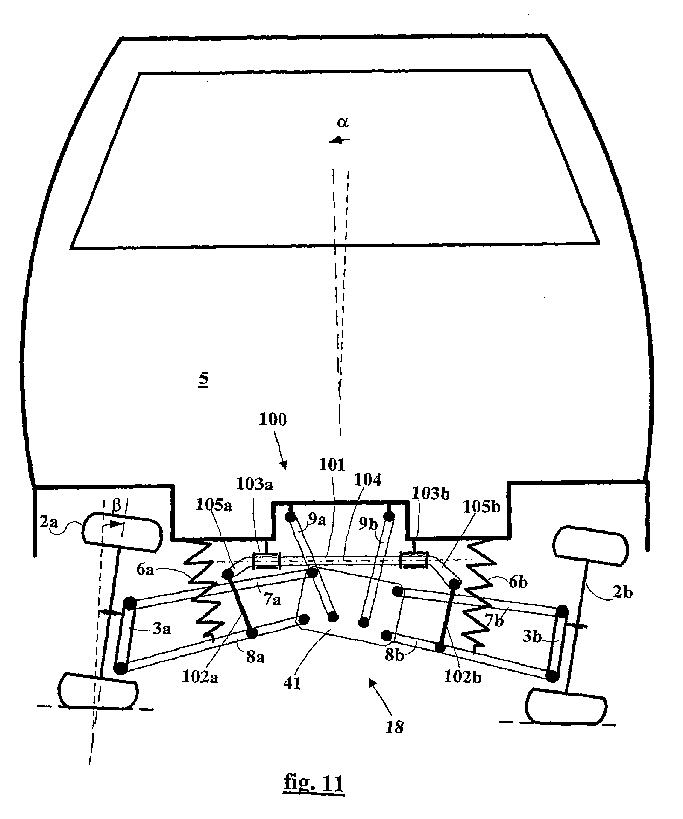

La figure 11 représente schématiquement le véhicule de la figure 10 dans une situation de roulis. La caisse est inclinée d'un angle α vers la gauche par exemple du fait que le véhicule parcourt une courbe à droite. Lorsque la caisse s'incline, l'axe de la barre anti-roulis s'incline également et le dispositif anti-roulis prend appui sur la partie gauche de la suspension et décharge la partie droite comme décrit plus haut. On a représenté également schématiquement (par la dissymétrie de la représentation des leviers gauche 105a et droit 105b) le fait que la barre anti-roulis 101 subit une torsion autour de son axe 104. On visualise bien sur cette figure que le dispositif anti-roulis 100 a également une influence sur le carrossage. En effet, lors du roulis, du fait que les bielles 102a et 102b sont inclinées par rapport à la verticale, le dispositif anti-roulis exerce un effort transversal sur la bascule 41 qui tend à la faire pivoter. Sur cette figure, les efforts générés ont tendance à incliner les roues vers la droite de la figure, c'est à dire à donner du contre-carrossage à la roue extérieure (gauche 2a) et du carrossage à la roue intérieure (droite 2b).

L'angle β d'inclinaison de la roue gauche 2a est donc ici la résultante de deux effets: l'effet des efforts transversaux appliqués dans l'aire de contact des pneumatiques (voir figure 5) et l'effet du dispositif anti-roulis. L'effet du dispositif anti-roulis sur le carrossage comme sur le roulis de la caisse est fonction de la différence de débattement de suspension entre les deux roues d'un même essieu.

On voit bien sur ces figures que plus les bielles seront inclinées par rapport à la verticale, plus l'effet sur le carrossage sera important. Evidemment, la raideur de la barre anti-roulis doit être adaptée en fonction de cette inclinaison de manière à assurer la maîtrise nécessaire du roulis de caisse.

Il est bien évident que les configurations représentées combinent des caractéristiques géométriques et des caractéristiques technologiques. Un très grand nombre de combinaisons ne sont pas explicitement décrites mais il est évident pour l'homme du métier des systèmes de suspension d'associer de manière différente les éléments décrits ainsi que tout élément non décrit mais connu en soi. L'objectif des figures étant seulement d'illustrer les principes qui caractérisent l'invention.

Comme on l'a vu, on peut choisir, en fonction du fonctionnement souhaité, une position du centre instantané de rotation du mouvement de carrossage (CIR r/c) dans un intervalle allant de 0.3 r au dessus du sol à 0.5 r sous le sol (r étant le rayon de la roue). Le fait de positionner ce point près du sol permet de limiter la variation de demie voie. Par exemple, dans le cas d'un centre instantané de rotation situé à 0.5 r du sol et pour une roue de 300 mm de rayon, un carrossage de 5° provoque un déport de l'aire de contact par rapport à la caisse (variation de demie voie) d'environ 12 mm.

Les différents exemples des figures illustrent le fait que le dispositif de suspension de l'invention peut être réalisé à partir de principes de suspension très différents pourvu que l'on obtienne la définition cinématique désirée. En particulier, les bascules que l'on a représentées dans des formes arbitraires peuvent prendre toute forme convenable permettant de positionner adéquatement les axes d'articulation et naturellement de supporter les contraintes de la suspension. De même pour les autres éléments constitutifs comme les bras transversaux.

Le plan de carrossage peut être défini comme le plan orthogonal au sol, transversal au véhicule et passant par le point d'application de la résultante des forces dans l'aire de contact. Les figures représentent dans ce plan les principes et plusieurs modes de réalisation de l'invention. Cette représentation en deux dimensions est avantageuse afin d'illustrer clairement les caractéristiques essentielles du dispositif de l'invention dont l'objectif est une variation contrôlée du carrossage. Dans cette représentation, le mouvement de carrossage est une rotation dans le plan autour d'un point de pivot (centre instantané de rotation). Il ne faut cependant pas oublier qu'une rotation s'effectue en réalité (en trois dimensions) autour d'un axe de pivot, réel ou virtuel (axe instantané de rotation). Cet axe est représenté par un point dans la représentation plane. Cet axe peut être construit sensiblement parallèle au plan du sol et à l'axe longitudinal du véhicule pour permettre les variations de carrossage visées. Cependant, en faisant varier l'orientation de cet axe, on peut créer des effets supplémentaires de braquage, de pince, d'ouverture ou d'enroulement en fonction des efforts transversaux (courbe) et longitudinaux (freinage, accélération) subis par la roue dans l'aire de contact. L'homme du métier sait, en procédant à des essais et/ou par des méthodes théoriques, déterminer l'orientation qu'il convient d'adopter en fonction du comportement qu'il attend de ce dispositif. Des expérimentations ont par exemple montré qu'une inclinaison de l'axe de pivot de 6° par rapport à l'horizontale permet d'induire un braquage lié au carrossage, selon un angle 10 fois inférieur à celui du carrossage. Ainsi lorsque les efforts transversaux induisent un carrossage de 5°, le braquage est d'environ 0.5°. L'inclinaison de l'axe de pivot peut être obtenu par exemple en équipant le véhicule d'un dispositif incliné de 6° par rapport à la verticale.

Les figures ne montrent pas tous les éléments nécessaires mais néanmoins connus des dispositifs de suspension. En particulier, l'homme du métier sait garantir le positionnement longitudinal de plan de roue, par exemple par l'intermédiaire d'un bras longitudinal ou par un guidage de la bascule et une liaison de la bascule au porte-roue par triangle ou trapèze. De même, la tenue du plan de roue en braquage est assurée soit par un élément relié au dispositif de direction soit par un élément de dimension fixe comme une biellette de pince pour un essieu non directeur. Cependant, un mode préféré de réalisation du dispositif de l'invention prévoit que ces éléments de contrôle du braquage relient directement le porte-roue à la bascule afin que le braquage puisse être contrôlé sans subir de perturbations du fait des variations importantes du carrossage rendues possibles par le dispositif de l'invention. De préférence, on peut utiliser cette liaison de la bascule au porte-roue pour induire un effet de braquage en fonction du carrossage puisque les mouvements de la bascule sont directement couplés au carrossage. Ainsi lorsque le carrossage est commandé par les efforts transversaux (dans le cas où le fonctionnement du dispositif de l'invention est passif), le braquage peut être induit par les efforts transversaux. Cet effet est donc le même que celui de l'inclinaison de l'axe de pivot évoqué plus haut.

Comme décrit plus haut, les figures montrent une représentation plane, c'est à dire en deux dimensions dans le plan de carrossage. Cette représentation permet une vision claire du fonctionnement théorique en carrossage et en variation de voie des dispositifs selon l'invention. En pratique, c'est à dire en trois dimensions, on peut construire des dispositifs conforme à cet enseignement en extrapolant fidèlement leurs caractéristiques à partir des représentations en deux dimensions. Dans ce cas, les points de pivot deviennent des axes orthogonaux au plan de carrossage. Cependant, on peut également appliquer cet enseignement à des dispositifs dont la représentation en projection sur le plan de carrossage est différente mais dont la cinématique, dans le plan de carrossage est conforme, à celle décrite ici en deux dimensions. Par exemple, un tel système peut comporter un triangle inférieur, un triangle supérieur et une biellette de pince. La traduction du fonctionnement de ce dispositif dans le plan de carrossage passe la détermination d'une configuration équivalente en deux dimensions. Ceci peut être le résultat d'une étude expérimentale ou théorique des mouvements de la roue autour de la position moyenne dans le plan de carrossage de laquelle on peut déduire cette configuration équivalente.

Les articulations des différents éléments du dispositif de suspension de l'invention peuvent être réalisées de diverses manières. Les articulations élastomériques utilisées couramment dans le domaine de la liaison au sol peuvent permettre de simplifier l'obtention de l'équilibre du système car elles introduisent des raideurs. D'autre part, il est connu qu'elles favorisent le confort du véhicule.

Le dispositif de l'invention peut être mise en oeuvre dans le but de compenser les déformations des éléments de la liaison au sol des véhicules actuels et permettre de meilleures performances. C'est à dire que l'on peut employer le dispositif de l'invention pour garantir que le plan de roue reste, en toutes circonstances, sensiblement orthogonal au plan du sol ou légèrement incliné pour tenir compte également de la déformation éventuelle du pneumatique. Ce but est généralement atteint par un dispositif de l'invention dont l'amplitude de carrossage utile est de quelques degrés seulement. Mais, le dispositif de l'invention peut également être mise en oeuvre dans le but de permettre une variation bien plus importante du carrossage, c'est à dire permettre un fonctionnement de la liaison au sol plus proche de celui d'une motocyclette que de celui des véhicules à trois roues et plus, actuellement sur le marché.

Dans le cas ou on utilise une barre anti-roulis rotative, les paliers 103 doivent assurer un maintien axial de la barre par rapport à la caisse afin de pouvoir transmettre des efforts transversaux. Ceci peut être réalisé par une butée rigide ou par un appui élastique. Un mode de réalisation préféré utilise des manchons élastomériques assurant à la fois la rotation possible de la barre et son maintien transversal.

Dans le dispositif de suspension de l'invention, le dispositif anti-roulis ayant une influence sur le carrossage, on peut, en utilisant un dispositif anti-roulis contrôlé, influencer le carrossage par l'intermédiaire du contrôle du dispositif anti-roulis. Différents dispositifs anti-roulis actifs ou contrôlés sont connus en soi.

D'une façon générale, les figures représentent une roue (2) comportant un bandage pneumatique mais l'invention s'adresse naturellement à tout type de roue avec ou sans bandage élastique, pneumatique ou non pneumatique, une caractéristique essentielle étant la position du centre instantané de rotation par rapport à l'aire de contact, quelle qu'elle soit.

**Revendications**

1. Dispositif de suspension (1, 1a, 11, 11a, 11b, 15, 16, 17, 18) destiné à relier un porte-roue (3, 3a) à une caisse (5) d'un véhicule, ledit dispositif comprenant des moyens conférant au porte-roue, par rapport à la caisse, un degré de liberté de carrossage et un degré de liberté de débattement de suspension indépendants l'un de l'autre, ledit dispositif comportant une bascule (4, 41) liée d'une part à la caisse et d'autre part aux éléments de suspension, la liaison de ladite bascule à la caisse permettant ledit degré de liberté de carrossage, ledit dispositif comportant en outre un porte-roue opposé (3b) destiné à porter une roue opposée (2b) d'un essieu dudit véhicule, ledit porte-roue opposé étant lié à la bascule (41) selon une configuration symétrique de celle du porte-roue (3a), ledit dispositif de suspension comprenant un dispositif anti-roulis (100, 110) apte à contrôler le roulis de la caisse, ledit dispositif anti-roulis étant en outre agencé de sorte à influencer la variation de carrossage en fonction de la différence de débattement de ladite roue par rapport à celui de la roue opposée appartenant au même essieu.

2. Dispositif selon la revendication 1, le porte-roue étant destiné à porter une roue de rayon "r" reposant sur le sol (S), le mouvement de carrossage du porte-roue par rapport à la caisse admettant un centre instantané de rotation (CIR r/c) situé dans un intervalle allant de 0.3 r au dessus du sol à 1.0 r en dessous du sol et de préférence à 0.5 r en dessous du sol.

3. Dispositif de suspension selon l'une des revendications précédentes dans lequel le dispositif anti-roulis comprend une barre anti-roulis, sollicitée en torsion, montée à rotation vis à vis de la caisse, ladite barre anti-roulis étant retenue en translation par rapport à ladite caisse.

4. Dispositif de suspension selon l'une des revendications 1 ou 2 dans lequel le dispositif anti-roulis comprend des chambres contenant un fluide dont le volume varie en fonction du débattement de suspension.

5. Dispositif de suspension selon l'une des revendications précédentes dans lequel le dispositif anti-roulis est contrôlé activement.

6. Dispositif de suspension selon l'une des revendications précédentes, ledit porte-roue étant destiné à porter une roue (2, 2a, 2b), ladite roue étant destinée à reposer au sol (S) par l'intermédiaire d'une aire de contact (AC), dans lequel le dispositif anti-roulis est configuré de manière à ce que, l'effort transversal (Fy) exercé par le sol sur la roue dans l'aire de contact généré au cours d'un faible débattement de suspension ne dépasse pas une limite correspondant à 0.1 P, « P » étant la charge à l'essieu.

7. Dispositif selon la revendication 6 dans lequel l'effort transversal (Fy) ne dépasse pas une limite correspondant à 0.05 P.

8. Dispositif de suspension selon l'une des revendications précédentes, ladite roue étant destinée à reposer au sol (S) par l'intermédiaire d'une aire de contact (AC), dans lequel le dispositif anti-roulis est configuré de manière à ce que la variation de carrossage en l'absence d'effort transversal (Fy) exercé par le sol au cours d'un faible débattement de suspension ne dépasse pas 2°.

9. Dispositif de suspension selon l'une des revendications précédentes dans lequel le dispositif anti-roulis est configuré de manière à ce que l'axe de la poussée résultante de l'action du ressort de suspension et du dispositif anti-roulis sur un élément de suspension soit, au cours d'un faible débattement unilatéral de suspension, au plus distant d'une distance "d" du point (G) de concours des axes idéaux de poussée, la distance "d" correspondant à 6.5 % de la voie de l'essieu.

10. Dispositif de suspension selon l'une des revendications précédentes dans lequel ledit dispositif anti-roulis est agencé de manière à influencer dans le même sens la variation de carrossage et la variation de l'angle de roulis de la caisse.

11. Dispositif de suspension selon l'une des revendications précédentes dans lequel le dispositif anti-roulis comprend une bielle (102) relié aux éléments de suspension, ladite bielle étant inclinée par rapport à la verticale dans la position moyenne de la suspension de sorte qu'une extrémité supérieure de la dite bielle se situe plus près du plan de roue qu'une extrémité inférieure.

12. Dispositif de suspension selon la revendication 11 dans lequel ladite bielle est inclinée d'un angle supérieur à 5° par rapport à la verticale dans la position moyenne de la suspension.

13. Dispositif selon l'une des revendications 2 à 12, ledit centre instantané de rotation (CIR r/c) étant situé sous le plan du sol (S) afin que des efforts transversaux (Fy) exercés par le sol sur la roue (2, 2a) dans l'aire de contact (AC) induisent une inclinaison du porte-roue (3, 3a) par rapport à la caisse dans le sens d'une diminution de carrossage lorsque lesdits efforts transversaux sont dirigés vers l'intérieur du véhicule et dans le sens d'une augmentation de carrossage lorsque lesdits efforts transversaux sont dirigés vers l'extérieur du véhicule.

14. Véhicule équipé du dispositif selon l'une des revendications précédentes.

**Claims**

1. Suspension system (1, 1a, 11, 11a, 11b, 15, 16, 17, 18) designed to connect a wheel support (3, 3a, 3b) to a body (5) of a vehicle, the said system comprising means (4, 4a, 41, 41a, 41b, 42, 44, 45) that confer on the wheel support, relative to the body, a degree of camber freedom and a degree of freedom of suspension deflection which are independent of one another, the said system comprising a rocker (4,41) connected on the one hand to the body and on the other hand to the suspension elements, such that the connection of the said rocker to the body allows the said degree of camber freedom, the said system also comprising an opposite wheel support (3b) designed to carry an opposite wheel (2b) of an axle of the said vehicle, the said opposite wheel support being connected to the rocker (41) in a configuration symmetrical to that of the wheel support (3a), the said suspension system comprising an anti-roll device (100, 101) capable of controlling the roll of the body, the said anti-roll device being in addition arranged so that it influences the camber variation as a function of the difference between the vertical deflection of the said wheel compared with that of the opposite wheel on the same axle.

2. System according to Claim 1, in which the wheel support is designed to carry a wheel of radius "r" that is in contact with the ground (S) and the camber movement of the wheel support relative to the body has an instantaneous centre of rotation (CIR r/c) located within a range between 0.3r above ground level and 1.0r below ground level and preferably 0.5r below ground level.

3. Suspension system according to either of the preceding claims, in which the anti-roll device comprises an anti-roll bar which is stressed in torsion, mounted to rotate with respect to the body, and the said anti-roll bar is held fast in translation relative to the said body.

4. Suspension system according to either of Claims 1 or 2, in which the anti-roll device comprises chambers containing a fluid whose volume varies as a function of the vertical deflection of the suspension system.

5. Suspension system according to any of the preceding claims, in which the anti-roll device is actively controlled.

6. Suspension system according to any of the preceding claims, in which the said wheel support is designed to carry a wheel (2, 2a, 2b), the said wheel being intended to be in contact with the ground (S) over a contact area (AC), and in which the anti-roll device is configured such that the transverse force (Fy) exerted by the ground on the wheel in the contact area and generated during a small vertical suspension deflection does not exceed a limit corresponding to 0.1P, "P" being the axle load.

7. System according to Claim 6, in which the transverse force (Fy) does not exceed a limit corresponding to 0.05P.

8. Suspension system according to any of the preceding claims, the said wheel being intended to contact the ground (S) over a contact area (AC), in which the anti-roll device is configured so that the camber variation in the absence of any transverse force (Fy) exerted by the ground during a small vertical suspension deflection does not exceed 2°.

9. Suspension system according to any of the preceding claims, in which the anti-roll device is configured so that the axis of the thrust resulting from the action of the suspension spring and of the anti-roll device on a suspension element during a small unilateral vertical suspension deflection, is at most a distance "d" away from the point (G) of coincidence of the ideal thrust axes, the distance "d" corresponding to 6.5% of the width of the axle.

10. Suspension system according to any of the preceding claims, in which the said anti-roll device is arranged so as to influence the camber variation and the body roll angle variation in the same direction.

11. Suspension system according to any of the preceding claims, in which the anti-roll device comprises a rod (102) connected to the suspension elements, the said rod being inclined relative to the vertical in the mean position of the suspension in such manner that an upper end of the said rod is closer to the wheel plane than a lower end thereof.

12. Suspension system according to Claim 11, in which the said rod is inclined at an angle greater than 5° relative to the vertical in the mean position of the suspension.

13. System according to any of Claims 2 to 12, in which the said instantaneous centre of rotation (CIR r/c) is located below ground level (S) so that transverse forces (Fy) exerted by the ground on the wheel (2, 2a) in the contact area (AC) induce a tilt of the wheel support (3, 3a) relative to the body in the direction of decreasing camber when the said transverse forces are directed towards the inside of the vehicle and in the direction of increasing camber when the said transverse forces are directed towards the outside of the vehicle.

14. Vehicle equipped with the system according to any of the preceding claims.

**Patentansprüche**

1. Aufhängungsvorrichtung (1, 1a, 11, 11a, 11b, 15, 16, 17, 18), die dazu bestimmt ist, einen Radträger (3, 3a) mit einer Karosserie (5) eines Fahrzeugs zu verbinden, wobei die Vorrichtung Einrichtungen enthält, die dem Radträger einen Radsturz-Freiheitsgrad und einen Federweg-Freiheitsgrad bezüglich der Karosserie verleihen, die voneinander unabhängig sind, wobei die Vorrichtung eine Wippe (4, 41) aufweist, die einerseits mit der Karosserie und andererseits mit den Aufhängungselementen verbunden ist, wobei die Verbindung der Wippe mit der Karosserie den Radsturz-Freiheitsgrad erlaubt, wobei die Vorrichtung außerdem einen gegenüberliegenden Radträger (3b) aufweist, der dazu bestimmt ist, ein gegenüberliegendes Rad (2b) einer Achse des Fahrzeugs zu tragen, wobei der gegenüberliegende Radträger mit der Wippe (41) gemäß einer symmetrischen Konfiguration bezüglich derjenigen des Radträgers (3a) verbunden ist, wobei die Aufhängungsvorrichtung eine Stabilisierungsvorrichtung (100, 110) enthält, die das Wanken der Karosserie steuern kann, wobei die Stabilisierungsvorrichtung außerdem so eingerichtet ist, dass sie die Radsturzänderung abhängig von der Einfederungsdifferenz des Rads bezüglich des zur gleichen Achse gehörenden, gegenüberliegenden Rads beeinflussen kann.

**2.** Vorrichtung nach Anspruch 1, wobei der Radträger dazu bestimmt ist, ein Rad mit dem Radius "r" zu tragen, das auf dem Boden (S) aufliegt, wobei die Radsturzbewegung des Radträgers bezüglich der Karosserie einen Momentandrehpunkt (CIR r/c) zulässt, der sich in einem Bereich von 0.3 r über dem Boden bis 1.0 r unter dem Boden und vorzugsweise bei 0.5 r unter dem Boden befindet.

**3.** Aufhängungsvorrichtung nach einem der vorhergehenden Ansprüche, bei der die Stabilisierungsvorrichtung einen torsionsbeanspruchten Stabilisator enthält, der bezüglich der Karosserie drehbar montiert ist, wobei der Stabilisator in Translationsrichtung bezüglich der Karosserie zurückgehalten wird.

**4.** Aufhängungsvorrichtung nach einem der Ansprüche 1 oder 2, bei der die Stabilisierungsvorrichtung Kammern enthält, die ein Fluid enthalten, dessen Volumen abhängig vom Federweg variiert.

**5.** Aufhängungsvorrichtung nach einem der vorhergehenden Ansprüche, bei der die Stabilisierungsvorrichtung aktiv gesteuert wird.

**6.** Aufhängungsvorrichtung nach einem der vorhergehenden Ansprüche, wobei der Radträger dazu bestimmt ist, ein Rad (2, 2a, 2b) zu tragen, wobei das Rad dazu bestimmt ist, mittels eines Kontaktbereichs (AC) auf dem Boden (S) aufzuliegen, wobei die Stabilisierungsvorrichtung so konfiguriert ist, dass die im Kontaktbereich vom Boden auf das Rad ausgeübte Querkraft (Fy), die während eines geringen Federwegs erzeugt wird, eine 0.1 P entsprechende Grenze nicht überschreitet, wobei « P » die Achslast ist.

**7.** Vorrichtung nach Anspruch 6, bei der die Querkraft (Fy) eine 0.05 P entsprechende Grenze nicht überschreitet.

**8.** Aufhängungsvorrichtung nach einem der vorhergehenden Ansprüche, bei der das Rad dazu bestimmt ist, mittels eines Kontaktbereichs (AC) auf dem Boden (S) aufzuliegen, bei der die Stabilisierungsvorrichtung so konfiguriert ist, dass die Radsturzänderung in Abwesenheit einer vom Boden während eines geringen Federwegs ausgeübten Querkraft (Fy) 2° nicht überschreitet.

**9.** Aufhängungsvorrichtung nach einem der vorhergehenden Ansprüche, bei der die Stabilisierungsvorrichtung so konfiguriert ist, dass die Achse des aus der Wirkung der Aufhängungsfeder und der Stabilisierungsvorrichtung resultierenden Schubs auf ein Aufhängungselement während eines geringen einseitigen Federwegs höchstens um einen Abstand "d" von dem Punkt (G) des Zusammentreffens der idealen Schubachsen entfernt ist, wobei der Abstand "d" 6.5 % der Spurweite der Achse entspricht.

**10.** Aufhängungsvorrichtung nach einem der vorhergehenden Ansprüche, bei der die Stabilisierungsvorrichtung so eingerichtet ist, dass sie in der gleichen Richtung die Radsturzänderung und die Änderung des Wankwinkels der Karosserie beeinflusst.

**11.** Aufhängungsvorrichtung nach einem der vorhergehenden Ansprüche, bei der die Stabilisierungsvorrichtung eine mit den Aufhängungselementen verbundene Schubstange (102) enthält, wobei die Schubstange in der Mittelstellung der Aufhängung bezüglich der Senkrechten geneigt ist, so dass ein oberes Ende der Schubstange sich näher der Radebene befindet als ein unteres Ende.

**12.** Aufhängungsvorrichtung nach Anspruch 11, bei der die Schubstange in der Mittelstellung der Aufhängung um einen Winkel von mehr als 5° bezüglich der Senkrechten geneigt ist.

**13.** Vorrichtung nach einem der Ansprüche 2 bis 12, wobei der Momentandrehpunkt (CIR r/c) sich unter der Ebene des Bodens (S) befindet, damit vom Boden auf das Rad (2, 2a) im Kontaktbereich (AC) ausgeübte Querkräfte (Fy) eine Neigung des Radträgers (3, 3a) bezüglich der Karosserie in Richtung einer Radsturzverringerung, wenn die Querkräfte zur Innenseite des Fahrzeugs gerichtet sind, und in Richtung einer Radsturzerhöhung induzieren, wenn die Querkräfte zur Außenseite des Fahrzeugs gerichtet sind.

**14.** Fahrzeug, das mit der Vorrichtung nach einem der vorhergehenden Ansprüche ausgestattet ist.

**fig. 1**

EP 1 551 652 B1

fig. 1a

fig. 2

fig. 3

2

PR

7 100

9a 5 9b

102

5 8 41

3

105 103 101 104 CIR b/c

11

S AC

fig. 4

CIR r/c

2

9a 5 9b

41

CIR b/c

Fy

AC

fig. 5

CIR r/c

16

fig.5a

fig.5b

fig.5c

17

fig. 6

**fig. 7**

**fig. 8**

**fig. 9**

**fig. 10**

**fig. 11**

**EP 1 551 652 B1**

## RÉFÉRENCES CITÉES DANS LA DESCRIPTION

**Documents brevets cités dans la description**

- WO 0172572 A
- US 5580089 A
- EP 1070609 A